Europäisches Patentamt

European Patent Office

Office européen des brevets

(19)

(11) Veröffentlichungsnummer: **0 216 781**
**B1**

(12) EUROPÄISCHE PATENTSCHRIFT

(45) Veröffentlichungstag der Patentschrift:
**01.06.88**

(51) Int. Cl.⁴: **B 62 D 3/12**, B 62 D 1/16

(21) Anmeldenummer: **85904100.6**

(22) Anmeldetag: **30.07.85**

(86) Internationale Anmeldenummer:
**PCT/EP 85/00383**

(87) Internationale Veröffentlichungsnummer:
**WO 86/01168 (27.02.86** Gazette 86/5)

(54) ZAHNSTANGENLENKGETRIEBE, INSBESONDERE FÜR KRAFTFAHRZEUGE.

(30) Priorität: 09.08.84 PC /EP84/002 39

(43) Veröffentlichungstag der Anmeldung:
08.04.87 Patentblatt 87/15

(45) Bekanntmachung des Hinweises auf die Patenterteilung:
01.06.88 Patentblatt 88/22

(84) Benannte Vertragsstaaten:
DE IT

(56) Entgegenhaltungen:
BE - A - 351 036
FR - A - 1 547 147
GB - A - 674 749
GB - A - 1 104 205
GB - A - 2 037 931

(73) Patentinhaber: **ZAHNRADFABRIK FRIEDRICHSHAFEN AKTIENGESELLSCHAFT**, Löwentaler Strasse 100 Postfach 2520,
**D-7990 Friedrichshafen 1 (DE)**

(72) Erfinder: **BETZ, Ansgar, Gmünderstrasse 25,
D-7070 Schwäbisch Gmünd (DE)**
Erfinder: **HÄGELE, Gerhard, Uhlandstrasse 1,
D-7081 Hohenstadt (DE)**

(74) Vertreter: **Raue, Reimund, Zahnradfabrik Friedrichshafen AG Löwentaler Strasse 100 Postfach 2520,
D-7990 Friedrichshafen 1 (DE)**

## Beschreibung

Die Erfindung betrifft ein Lenkgetriebe, insbesondere für Kraftfahrzeuge, nach dem Oberbegriff von Anspruch 1.

Eine durch eine Feder belastete Reibvorrichtung mit mehreren abwechselnd auf einer Lenkspindel und in einem die Lenkspindel umgebenden Gehäuse gehaltenen Reibscheiben, ist bereits aus der BE-A-351 036 bekannt. Eine derartige Reibvorrichtung hat die Aufgabe, den Reibungswiderstand des Lenkgetriebes zu erhöhen, so dass von einer unebenen Fahrbahn verursachte und über die gelenkten Räder auf das Lenkhandrad übertragene Stösse gedämpft werden. Diese bekannte Reibvorrichtung ist im Aufbau aufwendig, da sie z.B. zwei abgesetzte mit Gewinde versehenen Haltebuchsen nebst zugehörigen Befestigungsmuttern und mehrere Reibscheiben benötigt. Durch die Verwendung einer Vielzahl von Reibscheiben kann die Eigenreibung der Lenkung zu gross werden, so dass der Fahrer beim Drehen des Lenkhandrades einen zu hohen Lenkwiderstand überwinden muss.

Es ist Aufgabe der Erfindung, eine Lenkeinrichtung mit einer Reibvorrichtung zu schaffen, deren Eigenreibung auf leichtere Kraftfahrzeuge abgestimmt ist und die nur einen geringen Bauaufwand erforderlich macht.

Diese Aufgabe ist durch die im Anspruch 1 angegebenen Merkmale gelöst. Nach der Erfindung ist in einem aus einem Antriebsritzel und einer Zahnstange bestehenden Zahnstangenlenkgetriebe nahe des am oberen Ritzelende in ein Gehäuse eingesetzen Wälzlagers ein Gewindering eingeschraubt. Der Gewindering ist mit mindestens einer Nut versehen, in die zur Verdrehsicherung eine axial bewegliche Reibscheibe mit einer Nase eingreift. Die Reibscheibe liegt an einem am Wälzlager abgestützen und auf der Lenkspindel befestigten Anlaufring an. Der Gewindering stützt ausserdem an einem Absatz eine die Reibscheibe belastende Feder ab und dient gleichzeitig zu axialen Fixierung des Wälzlageraussenringes. Diese Anordnung bietet den Vorteil nur weniger Bauteile.

In einer bevorzugten Ausführungsform nach Anspruch 2 ist die Reibscheibe aus Kunststoff hergestellt, und auf der der Feder zugewandten Seite ist eine Metall-Schutzscheibe vorgesehen. Dadurch ist die Reibscheibe vor Beschädigungen geschützt.

Nach Anspruch 3 kann anstelle eines gesonderten Anlaufringes am Innenring des Wälzlagers ein Anlaufbord vorgesehen werden, an welchem sich die Reibscheibe abstützt. Nach Anspruch 4 kann schliesslich zwischen das Anlaufbord und die Reibscheibe ein Axialnadellager mit schräggestellten Nadeln eingebaut sein.

Mit Hilfe dieser drehmomenterhöhenden Reibvorrichtung ist es bei Zahnstangenlenkungen möglich, unabhängig von der Einstellung und vom Verschleisszustand des Druckstücks, die Eigenreibung der Lenkung so festzulegen, dass Axialschwingungen der Zahnstange bei der Geradeausfahrt, die als Drehschwingungen am Lenkhandrad spürbar wären, weitestgehend abgebaut werden. Die Funktionsflächen der Reibvorrichtung können für ihre Aufgabe, im Gegensatz zu denen am Druckstück, optimal gestaltet werden.

Ein weiterer durch die Erfindung erzielbarer Vorteil besteht darin, dass das Axialspiel des am oberen Ritzelende angeordneten und als Rillenkugellager ausgeführten Wälzlagers eliminiert wird. Dadurch erhöht sich die Steifigkeit der Lenkung, und als Folge davon ist die Lenkpräzision bei hohen Geschwindigkeiten beträchtlich verbessert.

Die Erfindung ist nachfolgend anhand von in der Zeichnung dargestellten Ausführungsbeispielen näher erläutert. Es zeigen:

Fig. 1 einen quer durch die Zahnstange geführten Teilschnitt durch das erfindungsgemässe Zahnstangenlenkgetriebe;

Fig. 2 eine Ausführungsform in einem Schnitt entsprechend Fig. 1 mit einem Anlaufbord am Innenring des Wälzlagers;

Fig. 3 eine weitere Ausführungsform, in welcher die Reibvorrichtung ein Axialnadellager mit schräggestellten Nadeln enthält;

Fig. 4 eine Ansicht eines ausgebauten Axialnadellagers nach Fig. 3.

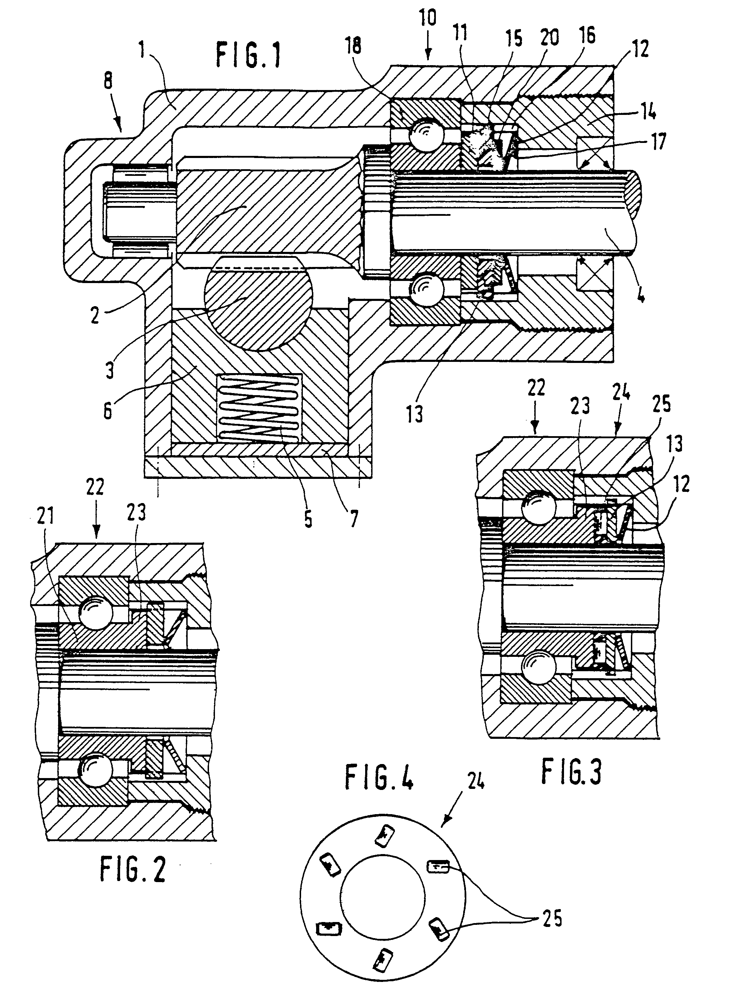

In Fig. 1 steht ein in einem Gehäuse 1 drehbar gelagertes Antriebsritzel 2 mit einer Zahnstange 3 im Eingriff. Das Antriebsritzel 2 ist über eine Lenkspindel 4 mit einem nicht gezeichneten Lenkhandrad verbunden. Ein durch eine Feder 5 belastetes Druckstück 6 drückt die Zahnstange 3 in eine Verzahnung des Antriebsritzels 2. Der Abstand des Druckstücks 6 zur Zahnstange 3 ist, z.B. durch eine Ausgleichsscheibe 7, einstellbar. Die Einstellung des Druckstücks kann auch in bekannter Weise über ein Gewindestück vorgenommen werden. Beidseitig des Antriebsritzels 2 sind Wälzlager 8 und 10 vorgesehen.

Bis hierher ist das Zahnstangenlenkgetriebe allgemein bekannt. Nach der Erfindung ist in Fig. 1 an dem am oberen Ritzelende eingebauten Wälzlager 10 eine Reibvorrichtung vorgesehen.

Diese Reibvorrichtung besteht aus einem an der Lenkspindel 4 befestigten Anlaufring 11 und aus einer durch die Kraft einer Feder 12 an den Anlaufring 11 gedrückten Reibscheibe 13. Die Reibscheibe 13 ist drehfest, aber axial verschieblich in einem in das Gehäuse 1 eingeschraubten Gewindering 14 geführt. Hierzu weist die Reibscheibe 13 mindestens eine Nase 15 auf, die in eine entsprechende Nut 16 des Gewinderinges 14 eingreift. Die die Reibscheibe 13 gegen den Anlaufring 11 drückende Feder 12 ist in einem Absatz 17 des Gewinderinges 14 abgestützt. Der Gewindering 14 hat ausserdem die Aufgabe, den Aussenring 18 des Wälzlagers 10 axial festzuhalten. Als Feder 10 findet vorzugsweise eine Tellerfeder mit annähernd waagrechter Kennlinie Verwendung, so dass die Vorspannung der Feder weitgehend unabhängig von der Einschraubtoleranz des Gewinderinges ist. Findet anstelle einer Reibscheibe 13 aus Stahl eine solche aus Kunststoff Verwendung, so ist es vorteilhaft, eine dünne Schutzscheibe 20 aus Metall zwischen die Feder und die Reibscheibe lose einzulegen. Die Schutzscheibe 20 kann auch auf die Kunststoff-Reibscheibe aufgeklebt sein.

Die Fig. 2 unterscheidet sich von Fig. 1 lediglich dadurch, dass am Innenring 21 eines Wälzlagers 22 ein Anlaufbord 23 vorgesehen ist. Ein separater Anlaufring 11 (Fig. 1) kann somit eingespart werden.

Die Ausführungsform nach Fig. 3 und 4 weist zwischen der Reibscheibe 13 und dem Anlaufbord 23 ein Axialnadellager 24 mit schräggestellten Nadeln 25 auf. Der Reibwert dieser Reibvorrichtung kann durch die Schrägstellung oder die Anzahl der Nadeln 25, den Reibradius und die Kraft der Feder 12 bestimmt werden. Anstelle eines mit dem Innenring des Wälzlagers 22 vereinigten Anlaufbordes 23 ist es selbstverständlich auch möglich, hier einen Anlaufring 11 (Fig. 1) vorzusehen.

*Bezugszeichen*

1   Gehäuse
2   Antriebsritzel
3   Zahnstange
4   Lenkspindel
5   Feder
6   Druckstück
7   Ausgleichsscheibe
8   Wälzlager
9   —
10  Wälzlager
11  Anlaufring
12  Feder
13  Reibscheibe
14  Gewindering
15  Nase
16  Nut
17  Absatz
18  Aussenring von 10
19  —
20  Schutzscheibe
21  Innenring
22  Wälzlager
23  Anlaufbord
24  Axialnadellager
25  schräggestellte Nadeln

## Patentansprüche

1. Lenkgetriebe, insbesondere für Kraftfahrzeuge, mit folgenden Merkmalen:
— eine Lenkspindel steht über Kraftübertragungsglieder eines Lenkgetriebes mit lenkbaren Rädern in Verbindung;
— oberhalb der Kraftübertragungsglieder ist zur Erhöhung der Eigenreibung des Lenkgetriebes eine durch eine Feder belastete Reibvorrichtung vorgesehen,
gekennzeichnet durch folgende Merkmale:
— in einem aus einem Antriebsritzel (2) und einer Zahnstange (3) bestehenden Zahnstangenlenkgetriebe ist nahe des am oberen Ritzelende in ein Gehäuse eingesetzten Wälzlagers (18) ein Gewindering (14) eingeschraubt;

— der Gewindering (14) weist mindestens eine Nut (16) auf;
— es ist eine axial bewegliche Reibscheibe (13) mit einer Nase (15) vorhanden, wobei die Nase zur Verdrehsicherung in die Nut (16) des Gewinderinges (14) eingreift;
— die Reibscheibe (13) liegt an einem am Wälzlager (18) abgestützten und auf der Lenkspindel (4) befestigten Anlaufring (11) an;
— die Feder (12) stützt sich an einem Absatz (17) des Gewinderinges (14) ab und belastet die Reibscheibe (13), und
— der Gewindering (14) dient gleichzeitig zur axialen Fixierung des Wälzlageraussenringes.

2. Lenkgetriebe nach Anspruch 1, dadurch gekennzeichnet, dass die Reibscheibe (13) aus Kunststoff hergestellt und auf der der Feder (12) zugewandten Seite eine Metallschutzscheibe (20) vorgesehen ist (Fig. 1).

3. Lenkgetriebe nach Anspruch 1, dadurch gekennzeichnet, dass anstelle des Anlaufrings (11) am Innenring (21) des Wälzlagers (22) ein Anlaufbord (23) vorgesehen ist, an welchem sich die Reibscheibe (13) abstützt (Fig. 2).

4. Lenkgetriebe nach Anspruch 3, dadurch gekennzeichnet, dass zwischen das Anlaufbord (23) des Innenringes (21) und die Reibscheibe (13) ein Axialnadellager (24) mit schräggestellten Nadeln (25) eingebaut ist.

## Claims

1. Steering gear, primarily for motor vehicles, with the following features:
— a sterring column is connected to steerable wheels by power transmission members of a steering gear;
— a spring-loaded friction device is provided above the power transmission members in order to increase the inherent friction of the steering gear,
characterized by the following features:
— in a rack steering gear consisting of an input pinion (2) and a rack (3), a threaded ring (14) is bolted to a roller bearing (18) set in a housing in the vicinity of the upper end of the pinion;
— the threaded ring (14) has at least one groove (16);
— an axially movable friction plate (13) is provided with a lug (15), such that the lug locates in the groove (16) of the threaded ring (14) and prevents rotation;
— the friction plate (13) rests on a thrust ring (11) which is supported on a roller bearing (18) and attached to the steering column (4);
— the spring (12) rests on a projection (17) of the threaded ring (14) and acts against the friction plate (13), and
— the threaded ring (14) also provides an axial attachment for the roller bearing outer ring.

2. Steering gear according to Claim 1, characterized in that the friction plate (13) is made of plastic and the side facing the spring (12) has a protective metal plate (20) (Fig. 1).

3. Steering gear according to Claim 1, characterized in that in place of the thrust ring (11), a thrust collar (23), on which the friction plate (13) rests, is fitted on the inner ring (21) of the roller bearing (22) (Fig. 2).

4. Steering gear according to Claim 3, characterized in that an axial needle bearing (24) with obliquely positioned needles (25) is fitted between the thrust collar (23) and the friction plate (13).

**Revendications**

1. Mécanisme de direction, en particulier pour véhicules à moteur, ayant les particularités suivantes :
— une colonne de direction est reliée à des roues dirigeables au moyen d'éléments de transmission de forces d'un mécanisme de direction ;
— au-dessus des éléments de transmission de forces est prévu un dispositif de friction avec ressort afin d'augmenter la friction propre du mécanisme de direction,
caractérisé en ce que :
— dans un mécanisme de direction à crémaillère comprenant un pignon d'entraînement (2) et une crémaillère (3), une bague filetée (14) est vissée près du palier à roulement (18) placé dans un carter sur l'extrémité supérieure du pignon ;

— la bague filetée (14) a au moins une rainure (16) ;
— un disque de friction (13) mobile en sens axial avec un talon (15) est fourni, le talon s'engrenant dans la rainure (16) de la bague filetée (14) en tant que sécurité contre les torsions ;
— le disque de friction (13) est disposé contre un anneau de butée (11) appuyé sur le palier à roulement (18) et fixé sur la colonne de direction (4) ;
— le ressort (12) est supporté par un décrochement (17) de la bague filetée (14) et appuie sur le disque de friction (13) tandis que la bague filetée (14) sert en même temps à fixer la bague extérieure du palier à roulement en sens axial.

2. Mécanisme de direction selon la revendication 1, caractérisé en ce que le disque de friction (13) est en matière plastique et une rondelle de protection en métal (20) est prévue du côté orienté vers le ressort (12) (figure 1).

3. Mécanisme de direction selon la revendication 1, caractérisé en ce que, à la place de l'anneau de butée (11) sur la bague intérieure (21) du palier à roulement (22), une surface d'appui (23) sur laquelle le disque de friction (13) prend appui est prévue (figure 2).

4. Mécanisme de direction selon la revendication 3, caractérisé en ce qu'un roulement à aiguilles axiales (24) avec des aiguilles en position inclinée (25) est monté entre l'anneau de butée (23) de la bague intérieure (21) et le disque de friction (13).

FIG.1

FIG.2

FIG.3

FIG.4